# EUROPÄISCHE PATENTSCHRIFT

(11) **EP 1 255 697 B1**
(45) Veröffentlichungstag und Bekanntmachung des Hinweises auf die Patenterteilung: **23.07.2003**
(21) Anmeldenummer: 01909685.8
(22) Anmeldetag: 24.01.2001
(51) Int. Cl.: C01G 55/00, C22B 3/00, B01J 31/40, C07F 15/00

(54) **VERFAHREN ZUR WIEDERGEWINNUNG VON RHODIUM AUS REAKTIONSPRODUKTEN DER OXOSYNTHESE**
METHOD FOR RECOVERING RHODIUM FROM REACTION PRODUCTS OF OXOSYNTHESIS
PROCEDE POUR LA RECUPERATION DE RHODIUM A PARTIR DE PRODUITS REACTIONNELS DE LA SYNTHESE OXO

(30) Priorität: 04.02.2000 DE 10005084
(43) Veröffentlichungstag der Anmeldung: 13.11.2002
(73) Patentinhaber: Celanese Chemicals Europe GmbH, 60439 Frankfurt am Main (DE)
(72) Erfinder: BOHNEN, Hans-Willi, 47441 Moers (DE); FISCHER, Richard Dr., 83043 Bad Aibling (US); HEWLETT, Mark, Bay City, TX 77414 (US); ZGORZELSKI, Wolfgang, 46149 Oberhausen (DE); SCHÖPPER, Norbert, 47178 Duisburg (DE)
(86) Internationale Anmeldenummer: EP0100759
(87) Internationale Veröffentlichungsnummer: WO01056932

(56) Entgegenhaltungen:
- EP-A- 0 007 768
- EP-A- 0 538 732
- DE-B- 1 592 502
- FR-A- 1 590 393
- US-A- 5 294 415

## Beschreibung

Die vorliegende Erfindung betrifft ein verbessertes Verfahren zur Abtrennung und Rückgewinnung von Rhodium aus den Reaktionsprodukten der Oxosynthese.

Die Herstellung von Aldehyden und Alkoholen durch Anlagerung von Kohlenmonoxid und Wasserstoff an olefinische Doppelbindungen (Hydroformylierung) ist bekannt. Die Reaktion wird durch Metalle der 8. Nebengruppe des Periodensystems der Elemente oder deren Verbindungen katalysiert, die unter den Reaktionsbedingungen Carbonyle oder Hydridocarbonyle bilden. Während früher Kobalt und Kobaltverbindungen als Katalysatoren eingesetzt wurden, finden heute in zunehmendem Maße Rhodiumkatalysatoren Anwendung, obgleich Rhodium um ein Vielfaches teurer ist als Kobalt. Rhodium gelangt dabei allein oder in Kombination mit Komplexbildnern, z.B. organischen Phosphinen, zum Einsatz. Während die Oxosynthese mit Rhodium als Katalysator Reaktionsdrücke von 25 bis 30 MPa erfordert, genügen bei Einsatz von Rhodium-Komplexverbindungen Drücke von 1 bis 5 MPa.

Für Rhodium-Katalysatoren ergeben sich in vielen Fällen deutliche Vorteile. Sie besitzen höhere Aktivität und Selektivität und ermöglichen überdies einen komplikationsfreien Betrieb der Produktionsanlage, insbesondere hinsichtlich der Durchführung der Synthese und der Ausbringung der Produkte aus dem Reaktor. Schließlich kann das klassische Oxoverfahren auf Basis von Kobaltkatalysatoren unter Verwendung der vorhandenen Apparateteile in vielen Fällen mit nur geringen Investitionen auf Rhodiumkatalysatoren umgestellt werden.

Trotz der geschilderten Vorteile des Rhodium katalysierten Oxoverfahrens wird in bestehenden Altanlagen noch nach dem klassischen Kobaitverfahren gearbeitet, insbesondere dann, wenn eine Umstellung des Verfahrens unter den gegebenen wirtschaftlichen Bedingungen auf die Rhodiumfahrweise als nicht notwendig erscheint.

Von besonderer Bedeutung ist die Wiedergewinnung des Rhodiums, das nach Beendigung der Umsetzung als Carbonylverbindung im Hydroformylierungsprodukt gelöst vorliegt. Zur Aufarbeitung wird das Oxorohprodukt mehrstufig entspannt, in dem man den Synthesegasdruck von etwa 25 bis 30 MPa auf zunächst 1,5 bis 2,5 MPa reduziert. Hierbei wird im Rohprodukt gelöstes Synthesegas frei. Anschließend kann man auf Normaldruck entspannen. Vor der Reindarstellung oder der Weiterverarbeitung des Reaktionsproduktes, die durch Destillation erfolgt, müssen die gelösten Rhodiumverbindungen entfernt werden. Man hat hierbei zu berücksichtigen, daß das Edelmetall im Rohprodukt in nur wenigen ppm homogen gelöst vorliegt. Ferner kann im Zuge des Entspannungsvorganges Rhodium in eine metallische Form übergehen oder mehrkemige Carbonylverbindungen bilden, die sich als Feststoffe aus der flüssigen organischen Phase abscheiden.

Nach dem aus der EP-A-147824 bekannten Verfahren wird Rhodium dadurch abgetrennt und wiedergewonnen, daß man es mit Hilfe komplexierender Reagenzien aus dem Oxorohprodukt extrahiert.

Hierbei versteht man als Oxorohprodukt das nach Entspannen und gegenbenenfalls Abkühlen anfallende Reaktionsgemisch der Oxosynthese.

Bei dem bekannten Verfahren verwendet man als Komplexbildner sulfonierte oder carboxylierte organische Phosphine, vorzugsweise sulfonierte Arylphosphine. Die sulfonierten oder carboxylierten organischen Phosphine bilden mit dem Rhodium wasserlösliche Komplexverbindungen. Dementsprechend kann das Rhodium aus dem organischen Rohprodukt mit einer wäßrigen Lösung des substituierten Phosphins extrahiert werden.

Das Rhodium geht dabei in die wäßrige Phase über, die sich durch einfaches Dekantieren vom organischen Produktgemisch abtrennen läßt. Durch Kreislaufführung der Lösung des Komplexbildners können hohe Rhodiumkonzentrationen in der wäßrigen Phase erreicht werden.

Nach der EP-A-156253 wird der aus EP-A-0147824 bekannte Prozeß durch die Zugabe eines Lösungsvermittlers zu der wäßrigen Lösung des Komplexbildners verbessert. Seine Wirkung besteht insbesondere darin, daß er die physikalischen Eigenschaften der Grenzfläche zwischen den beiden flüssigen Phasen verändert und dadurch den Übergang des wäßrigen Extraktionsmittels in die Produktphase und des Rhodiums aus der Produktphase in die wäßrige Phase beschleunigt. Die Wirksamkeit des beschriebenen Prozesses hängt jedoch von der Menge an zugesetztem Lösungsvermittler ab. Seine Menge kann nicht unbegrenzt erhöht werden, weil die zugesetzten Stoffe die wäßrige Lösung des Extraktionsmittels unnötig belasten und seine Stabilität beeinträchtigen.

Nach dem aus EP-B1-0 183 200 bekannten Verfahren wird das entspannte Oxorohprodukt ebenfalls mit einer wäßrigen Lösung eines Komplexbildners extrahiert. Dieses Verfahren arbeitet jedoch nicht mit einem Lösungsvermittlerzusatz sondern man verwendet als wasserlöslichen Komplexbildner sulfonierte Arylphosphine mit quatären Ammoniumionen als Gegenionen, beispielsweise das Benzyltrimethylammonium-Kation.

US-A-5,294,415 beschreibt ein Verfahren zur Rückgewinnung von Rhodium aus den Destillationsrückständen der Oxo-Synthese. Dabei wird zunächst der Destillationsrückstand mit einem Oxidationsmittel behandelt. Anschließend wird die organische Lösung mit einer wässrigen Lösung eines sulfonierten Triarylphosphins in Gegenwart von Kohlenmonoxid oder Kohlenmonoxid bildenden Verbindungen extrahiert.

Ein weiteres Verfahren zur Abtrennung von Rhodium ist aus EP-A2-0 007 768 bekannt. Dabei wird der nach Aldehydabtrennung angefallene rhodiumhaltige Rückstand zunächst mit einer wässrigen Phosphorsäurelösung extrahiert, wobei Rhodium und überschüssiges organisches Phosphin in die Wasserphase übergehen. Bei der anschließenden Neutralisation der abgetrennten Phosphorsäurelösung in Gegenwart eines organischen Lösungsmittels geht Rhodium und der Phosphinkomplex wieder in die organische Lösung über.

Bei den aus dem Stand der Technik bekannten Verfahren kommt eine Katalysatorlösung zum Einsatz, die bei Hydroformylierungsreaktionen unter Rhodiumkatalyse anfällt.

Probleme treten jedoch auf, wenn eine zunächst unter Kobaltkatalyse betriebene Hydroformylierungsanlage auf die Rhodiumkatalyse umgestellt werden soll.

So behandelt EP-B1-0 111 257 ein Hydroformylierungsverfahren, bei dem man das Abgas aus einer ersten Hydroformylierungsstufe, in der Olefin mit Kohlenmonoxid und Wasserstoff in Gegenwart einer wäßrigen Rhodiumkomplexverbindung enthaltenden Katalysatorlösung bei niedrigem Druck zur Reaktion gebracht wird, in einer zweiten Stufe nach dem klassischen Oxoverfahren bei hohem Druck und in Gegenwart von Kobaltkatalysatoren umsetzt.

Die Umstellung dieses Prozesses auf die komplette Rhodiumfahrweise, bei der also auch die zweite Stufe unter Rhodiumkatalyse durchgeführt wird, ist Gegenstand der EP-A1-0 805 138.

Die nach der Umstellung auf die Rhodiumfahrweise anfallende organische Phase enthält daher neben Rhodium auch Kobalt als katalytisch aktives Metall.

Die selektive Abtrennung von Kobalt und Rhodium aus Hydroformylierungsprodukten ist aus DE-AS-1 595 502 und FR-A-1 590 393 bekannt. Bei beiden Verfahren wird das Reaktionsgemisch mit einem Halogen behandelt, wobei es zur Bildung von Kobalthalogeniden kommt, während die Rhodiumcarbonyle nicht angefriffen werden. Wendet man Halogen in Form einer wässrigen Lösung an, so lassen sich die wasserlöslichen Kobaltverbindungen von den in der organischen Phase löslichen Rhodiumverbindungen durch eine Extraktion abtrennen.

Da Rhodium ein Edelmetall ist, besteht daher aus Gründen der Wirtschaftlichkeit ein großes Interesse an seiner Abtrennung, Rückgewinnung und Wiederverwendung als aktives Katalysatormetall aus der Kobalt enthaltenden Katalysatorlösung. Von entscheidender Bedeutung ist dabei, daß das Rhodium möglichst vollständig in einer Form, die die Wiederverwendung als Katalysatorkomponente gestattet, anfällt. Um eine möglichst optimale Aktivität und Selektivität des wiedergewonnenen Katalysators zu erhalten, wird eine möglichst vollständige Abtrennung des Kobalts von dem Rhodium angestrebt. Ferner soll Rhodium nach vollständiger Entfernung des Kobalts aus dem Hydroformylierungsprozeß oder aus den Reaktionsprodukten der Oxo-Synthese, die bisher durch eine ausschließliche Rhodiumkatalyse erhalten wurde, ebenfalls möglichst vollständig bei gleichzeitigem Erhalt der Aktivität und Selektivität der Katalysatorlösung wiedergewonnen werden.

Der vorliegenden Erfindung liegt daher die Aufgabe zugrunde, ein Verfahren bereitzustellen, mit dem Rhodium aus einer organischen Katalysatorlösung, die zusätzlich kobalthaltige Verbindungen als Verunreinigungen enthält, auf einfache Weise möglichst weitgehend zurückgewonnen werden kann. Zugleich soll gewährleistet sein, daß das Rhodium in einer für den Wiedereinsatz als Katalysator brauchbaren Form erhalten wird. Dabei sollen die erhaltenen Rhodiumverbindungen für den, Wiedereinsatz sowohl in einem homogenen, in organischer Phase durchgeführten Hydroformylierungsverfahren als auch in dem aus DE-PS 26 27 354 bekannten, in Gegenwart von Wasser durchgeführten zweiphasigen Hydroformylierungsprozeß geeignet sein.

Diese Aufgabe wird gelöst durch ein Verfahren zur Rückgewinnung von Rhodium aus organischen Lösungen, die Rhodiumkomplexverbindungen, Kobaltkomplexverbindungen und gegebenenfalls Komplexliganden enthalten, dadurch gekennzeichnet, daß
die organische Phase mit einer wäßrigen Lösung eines Phosphats der allgemeinen Formel (O)P(OR¹)(OR²)(OR³), wobei R¹, R² und R³ gleich oder verschieden sind und Wasserstoff, einen geradkettigen oder verzweigten Alkylrest mit 1-10 Kohlenstoffatomen oder einen substituierten oder unsubstituierten Arylrest mit 6-10 Kohlenstoffatomen, wobei der Arylrest mit geradkettigen oder verzweigten Alkylresten mit 1-4 Kohlenstoffatomen substituiert ist, bedeuten, oder eines Phosphonats der allgemeinen Formel R⁴P(O)(OR⁵)(OR⁶), wobei R⁴, R⁵ und R⁶ gleich oder verschieden sind und Wasserstoff, einen geradkettigen oder verzweigten Alkylrest mit 1-10 Kohlenstoffatomen oder einen substituierten oder unsubstituierten Arylrest mit 6-10 Kohlenstoffatomen, wobei der Arylrest mit geradkettigen oder verzweigten Alkylresten mit 1-4 Kohlenstoffatomen substituiert ist, bedeuten, extrahiert wird, wobei die Rhodiumkomplexverbindungen in der organischen Phase verbleiben;
die organische Phase mit Wasser bei einem pH-Wert von 0 bis 8 gewaschen wird;
nach Phasentrennung die organische Phase bei einer Temperatur von 0 bis 100°C mit einem Oxidationsmittel behandelt wird;
die organische Phase mit einer wäßrigen Lösung eines wasserlöslichen Arylphosphins bei erhöhter Temperatur und erhöhtem Druck behandelt wird; und
die rhodiumhaltige wäßrige Lösung von der organischen Phase durch Phasentrennung abgetrennt wird.

Die erfindungsgemäße Arbeitsweise eignet sich allgemein zur Rückgewinnung von Rhodium aus einer organischen Phase. Eine solche organische Phase ist beispielsweise das Oxorohprodukt, bei dem es sich um das nach Entspannen und gegebenenfalls Abkühlen anfallende Reaktionsgemisch der Hydroformylierungsreaktion handelt, oder der Destillationsrückstand aus dem Oxorohprodukt bei der Aldehydabtrennung. Die organische Phase enthält zusätzlich noch Kobaltverbindungen und/oder Komplexliganden, was dann der Fall ist, wenn ein bisher unter Kobaltkatalyse durchgeführter Hydroformylierungsprozeß auf die Rhodiumfahrweise umgestellt wurde. Das erfindungsgemäße Verfahren kann aber auch zur Rhodiumrückgewinnung angewendet werden, wenn die ursprünglich vorhandene Kobaltmenge mittlerweile ausgeschleust wurde oder der Hydroformylierungsprozeß von vornherein unter Rhodiumkatalyse betrieben wurde.

Die dem Rückgewinnungsverfahren zugeführte organische Phase enthält neben den gewünschten Aldehyden auch ihre Kondensationsprodukte sowie Alkohole. Gegebenenfalls sind noch Komplexliganden zugegen, abhängig davon, ob der alte Kobaltprozeß in Gegenwart eines Komplexliganden durchgeführt wurde und ob der Rhodiumprozeß unter Verwendung von Komplexliganden betrieben wird. Es ist aber auch möglich, der nach der Hydroformylierungsreaktion angefallenen organischen Phase vor der weiteren Aufarbeitung Komplexliganden zur Stabilisierung von Rhodiumkomplexen hinzuzufügen. Als Komplexliganden sind die in Hydroformylierungsverfahren üblichen Liganden, wie Alkylphosphine, Alkylarylphosphine oder Arylphosphine, beispielsweise Triphenylphosphin zugegen. Als weitere Komponenten können die aus den Kompiexliganden ableitbaren Oxide, beispielsweise Triphenylphosphinoxid in der organischen Phase gelöst vorliegen.

Die im folgenden dargelegten Arbeitsschritte beschreiben die Aufarbeitung einer Rhodium enthaltenden Katalysatorlösung, die zusätzlich noch Kobaltverbindungen als Verunreinigungen enthält. Selbstverständlich läßt sich die erfindungsgemäße Arbeitswesie auch auf solche organische Rhodium enthaltende Katalysatorlösungen anwenden, aus denen das Kobalt bereits vollständig entfernt wurde oder die aus einem in organischer Phase unter Rhodiumkatalyse durchgeführten Hydroformylierungsprozeß stammen.

Rhodium liegt neben Kobalt in einer Konzentration von 10 bis 10000 ppm, insbesondere von 100 bis 5000, bevorzugt 200 bis 1000 Gew.-ppm, bezogen auf die Gesamtmasse der Lösung vor. Der Kobaltgehalt beträgt im allgemeinen 10 bis 5000 Gew.-ppm, bezogen auf die Gesamtmasse der Lösung. Im weiteren Verlauf des unter Rhodiumkatalyse durchgeführten Hydroformylierungsprozesses nimmt der Kobaltgehalt durch die kontinuierliche Ausschleusung aus dem Hydroformylierungsprozeß ab. Die organische Phase enthält 1 bis 20, insbesondere 1 bis 10, bevorzugt 2 bis 6 Gew.-% Komplexliganden, bezogen auf die Gesamtmasse der organischen Phase. Daneben befinden sich noch Oxidationsprodukte der Komplexliganden, wie Phosphinoxide. Ihre Konzentration beträgt im allgemeinen 1 bis 10 Gew.-%, bezogen auf die Gesamtmasse der organischen Phase. Als organische Bestandteile sind Aldehyde, Alkohole, Aldole, Kondensationsprodukte und gegebenenfalls Olefin zugegen, falls für die Hydroformylierungsreaktion ein Olefin, das mindestens 4 Kohlenstoffatome enthält, eingesetzt wurde. Ihr Mengenverhältnis zueinander hängt davon ab, ob man das Oxorohprodukt oder den daraus erhaltenen Destillationsrückstand für das erfindungsgemäße Aufarbeitungsverfahren wählt.

Mit Hilfe des erfindungsgemäßen Verfahrens gelingt es, das allgemein in geringer Konzentration vorliegende Rhodium mit überraschend hoher Selektivität und Ausbeute von dem im Überschuß vorliegenden Kobalt abzutrennen.

In dem erfindungsgemäßen Verfahren wird zunächst das Kobalt aus der vorliegenden organischen Phase abgetrennt.
Dazu wird die organische Phase mit einer wäßrigen Lösung eines Phosphats der allgemeinen Formel (O)P(OR¹)(OR²)(OR³) extrahiert. Dabei sind R¹, R² und R³ gleich oder verschieden und bedeuten Wasserstoff, einen geradkettigen oder verzweigten Alkylrest mit 1-10 Kohlenstoffatomen, vorzugsweise 1-5 Kohlenstoffatomen, oder einen substituierten oder unsubstituierten Arylrest mit 6-10 Kohlenstoffatomen. Dabei kann der Arylrest mit geradkettigen oder verzweigten Alkylresten mit 1-4 Kohlenstoffatomen substituiert sein. Vorzugsweise wird zur Extraktion eine wäßrige Phosphorsäurelösung oder eine wäßrige Lösung von Trimethylphosphat verwendet.

Auch wäßrige Phosphonatlösungen lassen sich in dem Extraktionsschritt verwenden. Als Phosphonsäuren kommen Verbindungen der allgemeinen Formel R⁴P(O)(OR⁵)(OR⁶) in Betracht. R⁴, R⁵ und R⁶ sind gleich oder verschieden und bedeuten Wasserstoff, einen geradkettigen oder verzweigten Alkyirest mit 1-10 Kohlenstoffatomen, vorzugsweise 1-5 Kohlenstoffatomen, oder einen substituierten oder unsubstituierten Arylrest mit 6-10 Kohlenstoffatomen. Falls der Arylrest substituiert ist, trägt er geradkettige oder verzweigte Alkylreste mit 1-4 Kohlenstoffatomen. Vozugsweise wird zur Extraktion eine wäßrige Phosphonsäurelösung mit R⁴ gleich Methyl, Ethyl, Propyl oder Butyl oder eine wäßrige Lösung von Methyldimethylphosphonat verwendet.

Die Konzentration des Extraktionsmittels in der wäßrigen Lösung ist über einen weiten Bereich variabel. Im allgemeinen setzt man wäßrige Lösungen ein, bei denen die Konzentration des phosphorhaltigen Extraktionsmittels 1 bis 95, vorzugsweise 30 bis 60 Gew.-%, bezogen auf die wäßrige Extraktionslösung, beträgt.

Führt man die Extraktion des Kobalts bei Normaldruck durch, so wird bei einer Temperatur von 0 bis 100°C, vorzugsweise 20 bis 40°C gearbeitet. Es ist aber auch möglich unter Druck bei Temperaturen von 100 bis 200°C, vorzugsweise von 120 bis 140°C die organische Phase mit dem wäßrigen Extraktionsmittel zu behandeln. Arbeitet man bei Temperaturen oberhalb 100°C beträgt der Druck im allgemeinen 0,5 bis 20 MPa.

Um eine ausreichende Phasentrennung zu erzielen, bewegt sich das Volumenverhältnis von organischer Phase zu wäßriger Extraktionsphase von 20 zu 80 bis 80 zu 20, vorzugsweise von 40 zu 60 bis 60 zu 40. Die Extraktion wird im allgemeinen über einen Zeitraum von 0,5 bis 5 Stunden, vorzugsweise 1 bis 3 Stunden durchgeführt.

Der Extraktionschritt wird im allgemeinen mehrfach wiederholt, im allgemeinen wird 2 bis 4 mal nacheinander die organische Phase extrahiert.

Zur Entfernung restlicher Mengen an Extraktionsmittel wird die behandelte organische Phase mit Wasser bei einer Temperatur von 0 bis 100°C, vorzugsweise 20 bis 40°C versetzt. Die Wassermenge beträgt im allgemeinen ca. 25 bis 50 % des Volumens der vorliegenden organischen Phase. Man führt die Wasserwäsche bei einem pH-Wert in einem Bereich von 0-8, vorzugsweise 4-8, durch. Zur Einstellung des Waschwassers auf den gewünschten pH-Wert setzt man dabei im allgemeinen eine wäßrige Lösung an alkalisch reagierender Substanz mit einer Konzentration von 3 bis 20 Gew.-% dem Waschwasser hinzu. Vorzugsweise verwendet man wäßrige Lösungen von Alkali- oder Erdalkalihydroxiden, -carbonaten oder -hydrogencarbonaten, insbesondere von Natriumhydroxid oder Kaliumhydroxid.

Zur Vervollständigung der Phasentrennung empfiehlt es sich häufig, ein organisches Lösungsmittel hinzuzufügen. Als Lösungsmittel kommen dabei aliphatische Kohlenwasserstoffe mit 6 bis 12 Kohlenstoffatomen, aromatische Kohlenwasserstoffe mit 6 bis 12 Kohlenstoffatomen, Aldehyde oder deren Kondensationsprodukte in Betracht. Besonders empfiehlt sich der Zusatz gerade des Aldehyds, der das Zielprodukt der Oxosynthese ist. Die Menge des zugesetzten organischen Lösungsmittels entspricht dabei der Menge der behandelten organischen Phase.

Die gemäß dem erfinderischen Verfahren durchzuführende Extraktion mit anschließender Wasserwäsche und pH-Werteinstellung führt zu einer Abreicherung des Kobaltgehaltes in der behandelten organischen Phase von mehr als 90 %, bezogen auf die ursprünglich vorhandene Kobaltmenge.

Die nach der Extraktion und Wasserwäsche vorliegende organische Phase wird anschließend einer oxidativen Behandlung unterzogen. Die Oxidation der organischen Phase wird bei Temperaturen von 0 bis 100°C, insbesondere 30 bis 60°C und bevorzugt 50 bis 60°C durchgeführt. Da die organische Phase Aldehyde enthält, die zum einen aus der Oxosynthese stammen oder die zur Unterstützung der Phasentrennung während der Wasserwäsche zugesetzt wurden, kommt es während der Oxidation zur Bildung von Carbonsäuren. Die Bildung der Carbonsäuren und weiterer Oxidationsprodukte aus den organischen Bestandteilen verläuft exotherm. Um eine unkontrollierte Oxidationsreaktion zu vermeiden, ist gegebenenfalls ein Gegenkühlen des Oxidationsreaktors erforderlich. Infolge der Oxidation wird nicht nur der im Überschuß vorhandene Komplexligand, sondern auch der Rhodiumkomplex selbst angegriffen, wobei der Ligand in eine Form, die sich nicht mehr zur Komplexierung eignet, umgewandelt wird. Aus den im allgemeinen als Komplexliganden verwendeten Phosphinen entstehen die Phosphinoxide, und der Rhodiumkomplex fällt auseinander.

Als Oxidationsmittel verwendet man reinen Sauerstoff oder Sauerstoff enthaltende Gasgemische, insbesondere Luft. Es ist jedoch auch möglich, andere Oxidationsmittel zu gebrauchen, wie Wasserstoffperoxid, Wasserstoffperoxid bildende Verbindungen, Hypochlorit, Chromate oder Permanganate.

Die Oxidation kann sowohl unter Normaldruck, als auch bei erhöhtem Druck durchgeführt werden. Geeignete Drücke sind 0,1 bis 2,0, insbesondere 0,2 bis 1 und bevorzugt 0,3 bis 0,7 MPa.

Die Oxidationsdauer beträgt im allgemeinen von 0,5 bis 24 Stunden. Die genaue Oxidationsdauer hängt von dem Gehalt des Komplexliganden in der organischen Phase ab und kann durch einfache Vorversuche ermittelt werden. Der Verlauf der Oxidationsreaktion wird durch gaschromatografische Kontrolle des Gehaltes an Komplexliganden überprüft. Sobald der Komplexliand vollständig.zu dem entsprechenden Oxid abreagiert ist, wird die Oxidationsreaktion beendet.

Nach einer bewährten Ausführungsform legt man die organische Phase in einem geeigneten Reaktor vor, z.B. in einem mit einem Einlaßstutzen und Frittenaufsatz versehenen Rührreaktor oder in einem mit einem Anströmboden versehenen Rohrreaktor, der gegebenenfalls noch Füllkörper enthält, und leitet den Sauerstoff oder das Sauerstoff enthaltende Gasgemisch von unten durch die organische Phase.

Die nach der oxidativen Behandlung erhaltene organische Phase wird anschließend mit einer wäßrigen Lösung eines wasserlöslichen Komplexliganden extrahiert. Bei den wasserlöslichen Komplexliganden handelt es sich im allgemeinen um Phosphine der allgemeinen Formel

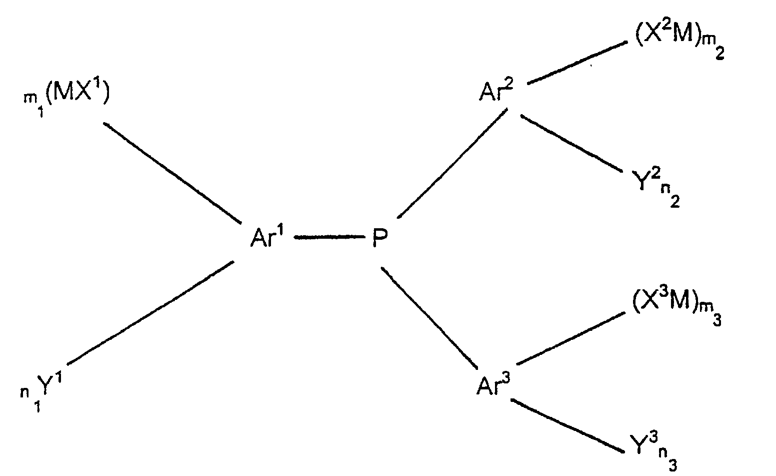

Hierin steht Ar¹, Ar², Ar³ jeweils für eine Phenyl- oder Naphthylgruppe, Y¹, Y², Y³ jeweils für eine geradkettige oder verzweigte Alkylgruppe mit 1 bis 4 C-Atomen, eine Alkoxygruppe, ein Halogenatom, eine OH-, CN-, NO₂- oder R⁷R⁸N-Gruppe, in der R⁷ und R⁸ jeweils eine geradkettige oder verzweigte Alkylgruppe mit 1 bis 4 C-Atomen ist, X¹, X², X³ bedeutet jeweils einen Carboxylat-(COO⁻) und/oder Sulfonat-(SO₃⁻)-Rest, n₁, n₂, n₃ sind gleiche oder verschieden Zahlen von 0 bis 5, M stellt ein Alkalimetallion, das Äquivalent eines Erdalkalimetall- oder Zinkions oder ein Ammonium- oder quatäres Alkylammoniumion der allgemeinen Formel N(R⁹R¹⁰R¹¹R¹²)⁺ dar, in der R⁹, R¹⁰, R¹¹, R¹² jeweils eine geradkettige oder verzweigte Alkylgruppe mit 1 bis 4 C-Atomen ist, und m₁, m₂, m₃ sind gleiche oder verschiedene ganze Zahlen von 0 bis 3, wobei mindestens eine Zahl m₁, m₂, m₃ gleich oder größer als 1 ist.

Die wäßrige Lösung enthält 1 bis 40, insbesondere 10 bis 20, bevorzugt 10 bis 15 Gew.-% wasserlöslichen Komplexliganden, bezogen auf die wäßrige Lösung.

Die wäßrige, den Komplexliganden enthaltende Lösung wird in einer solchen Menge eingesetzt, daß das Molverhältnis Rhodium zu Phosphor III von 1:1 bis 1:200, vorzugsweise von 1:10 bis 1:20 beträgt. Unter Berücksichtigung des einzustellenden Molverhältnisses Rhodium zu Phosphor III und vor dem Hintergrund, daß organische und wäßrige Phase in einem zur Phasentrennung geeigneten Mengenverhältnis vorliegen sollten, wird die Konzentration an wasserlösichem Liganden in der wäßrigen Lösung gewählt. Im allgemeinen liegt das Volumenverhältnis von organischer zu wäßriger Phase von 30 zu 70 bis 70 zu 30.

Die Extraktion des Rhodiums aus der organischen in die wäßrige Phase wird unter erhöhtem Druck und erhöhter Temperatur durchgeführt. Im allgemeinen wird bei Drücken von 1 bis 20 MPa, vorzugsweise von 1 bis 10 MPa, insbesondere von 2,5 bis 5 MPa und bei Temperaturen von 20 bis 200°C, vorzugsweise 50 bis 150°C,insbesondere 120 bis 140°C gearbeitet.

Hierbei wird die Extraktion entweder unter Eigendruck, unter Aufpressen eines Inertgases, wie z. B. Stickstoff oder eines Edelgases oder unter Synthesegasdruck durchgeführt. Die Extraktionsdauer beträgt im allgemeinen 0,5 bis 5 Stunden.

Besonders vorteilhaft ist es, die Extraktion in Gegenwart von Synthesegas durchzuführen. Dabei kann die Zusammensetzung des Synthesegases, also das Verhältnis von Wasserstoff zu Kohlenmonoxid in weiten Grenzen schwanken. Im allgemeinen beträgt das molare Verhältnis Wasserstoff zu Kohlenmonoxid 1:10 bis 10:1. Mischungen, die Wasserstoff und Kohlenmonoxid in einem molaren Verhältnis von 1:1 enthalten, sind besonders geeignet.

Die Extraktion mit der wäßrigen Komplexligandenlösung unter Synthesegasbedingungen führt zu wasserlöslichen Rhodiumkomplexverbindungen, die neben den Komplexliganden auch Kohlenmonoxid und Wasserstoff in komplexer Form gebunden enthalten. Solchen Rhodiumkomplexen wird katalytische Aktivität zugeschrieben und die nach Phasentrennung erhaltene wäßrige Katalysatorlösung kann ohne weitere Behandlung zur Hydroformylierung von Olefinen nach dem Zweiphasenprozeß, wie z.B. aus DE-PS 26 27 354 bekannt, eingesetzt werden.

Es ist aber auch möglich, die nach dem erfindungsgemäßen Verfahren erhaltene wäßrige rhodiumhaltige Lösung nach Zugabe eines wasserlöslichen Salzes einer Carbonsäure mit 7 bis 22 Kohlenstoffatomen im Überschuß, bezogen auf Rhodium, einer weiteren Oxidation zu unterziehen, ein Verfahren, das z.B. aus EP-B1-0 255 673 und EP-B1-0 367 957 bekannt ist. Aus dieser wäßrigen Lösung läßt sich Rhodium als in Wasser schwer- oder unlösliche Verbindung, z.B. in Form des Rhodium-2-ethylhexanonats abscheiden, und in einem in der organischen Phase einphasig durchgeführten Hydroformylierungsprozeß einsetzen. Ein solcher Hydroformylierungsprozeß ist z.B. aus EP-B1-0 188 246 bekannt.

Wie aus EP-B1-0 255 673 bekannt, eignen sich als Oxidationsmittel vorzugsweise Sauerstoff oder Sauerstoff enthaltende Gasgemische, wie zum Beispiel Luft. Es ist jedoch auch möglich, andere Oxidationsmittel zu gebrauchen, wie Wasserstoffperoxid, Wasserstoffperoxid bildende Verbindungen, Hypochlorit, Chromate oder Permanganate. Die oxidative Behandlung führt zu einem Zerfall des den wasserlöslichen Liganden enthaltenden Rhodiumkomplexes durch die Bildung von nicht mehr komplexfähigen Phosphor (V)-Oxid-Verbindungen aus den im Extraktionsschritt verwendeten wasserlöslichen Phosphinen. Während des Oxidationsvorganges scheidet sich Rhodium in Form von wasserunlöslichen Verbindungen, vermutlich als Rhodiumcarboxylat, ab. Die Oxidation wird bei einer Temperatur von 50 bis 200°C bei Normaldruck oder bei erhöhtem Druck von 0,1 bis 2,0 MPa über einen Zeitraum von 0,5 bis 24 Stunden durchgeführt. In Erweiterung der Lehre aus EP-B-1-0 255 673 und EP-B1-0 367 957 wird nach dem Oxidationsschritt die wäßrige Lösung mit einem ein organisches Phosphin oder Diphosphin enthaltenden organischen Lösungsmittel extrahiert. Als organisches Lösungsmittel verwendet man aliphatische Kohlenwasserstoffe mit 6 bis 12 Kohlenstoffatomen, aromatische Kohlenwasserstoffe mit 6 bis 12 Kohlenstoffatomen, vorzugsweise Benzol, Toluol oder die isomeren Xylole, Ether wie zum Beispiel Diethylether, Dibutylether, oder Alkohole wie zum Beispiel Butanol, die isomeren Pentanole, Ethylenglykol oder Diethylenglykol. Als Phosphine oder Diphosphine können z.B. Triphenylphosphin, Tributylphosphin, Tripropylphosphin, Triethylphosphin, Trioctylphosphin, Diethylphenylphosphin, Diphenylethylphosphin, Diphenyl-(dimethylamino)phenylphosphin, Methylcyclohexylanisylphosphin, 2,2'-Bis((diphenylphosphino)methyl)-1,1'-biphenyl, 1,2-Bis(diphenylphosphino)ethan oder 2,2'-Bis((diphenylphosphino)methyl)-1,1 '-binaphthyl eingesetzt werden.

Durch die Extraktion dieser Lösung mit Phosphinen oder Diphosphinen, gelöst in einem organischen Lösungsmittel, läßt sich das Rhodium nahezu quantitativ aus der wäßrigen in die organische Phase überführen.

Die Extraktion des Rhodiums aus der wäßrigen in die organische Phase wird unter erhöhtem Druck und erhöhter Temperatur durchgeführt. Im allgemeinen wird bei Drücken von 1 MPa bis 20MPa, vorzugsweise von 1 MPa bis 10 MPa, insbesondere von 2,5 MPa bis 5 MPa und bei Temperaturen von 20°C bis 200°C, vorzugsweise 50°C bis 150°C, insbesondere 120°C bis 140°C gearbeitet.

Hierbei wird die Extraktion entweder unter Eigendruck, unter Aufpressen eines Inertgases, wie z. B. Stickstoff oder eines Edelgases oder unter Synthesegasdruck durchgeführt. Die Extraktionsdauer beträgt im allgemeinen 0,5 bis 5 Stunden.

Besonders vorteilhaft ist es, die Extraktion in Gegenwart von Synthesegas durchzuführen. Dabei kann die Zusammensetzung des Synthesegases, also das Verhältnis von Wasserstoff zu Kohlenmonoxid in weiten Grenzen schwanken. Im allgemeinen beträgt das molare Verhältnis Wasserstoff zu Kohlenmonoxid 1:10 bis 10:1. Mischungen, die Wasserstoff und Kohlenmonoxid in einem molaren Verhältnis von 1:1 enthalten, sind besonders geeignet.

Die organische, den Komplexliganden enthaltende Lösung wird in einer solchen Mengen eingesetzt, daß das Molverhältnis Rhodium zu Phosphor III von 1:1 bis 1:200, vorzugsweise von 1:10 bis 1:20 beträgt. Unter Berücksichtigung des einzustellenden Molverhältnisses Rhodium zu Phosphor III und vor dem Hintergrund, daß organische und wäßrige Phase in einem zur Phasentrennung geeigneten Mengenverhältnis vorliegen sollten, wird die Konzentration an Liganden in der organischen Lösung gewählt. Im allgemeinen liegt das Volumenverhältnis von organischer zu wäßriger Phase von 30 zu 70 bis 70 zu 30.

Die nach dieser Arbeitsweise erhaltene Rhodium enthaltende organische Lösung läßt sich als Katalysatoriösung in dem homogen durchgeführten Hydroformylierungsprozeß verwenden, wie er z.B. aus EP-B1-0 188 246 bekannt ist.

Das erfindungsgemäße Verfahren läßt sich mit großen Erfolg zur Abtrennung und Wiedergewinnung von Rhodium aus den Produkten der Hydroformylierung end- und innenständiger Olefine mit mehr als 3 Kohlenstoffatomen anwenden. Werden verzweigte Olefine als Ausgangsstoffe verwendet, eignet sich das erfindungsgemäße Verfahren zur Abtrennung von Rhodium besonders aus den Reaktionsprodukten, die bei der Hydroformylierung von i-Hepten, Diisobutylen, Tri- und Tetrapropylen oder von unter der Bezeichnung Dimersol im Handel befindlichen C8-Olefinen. Setzt man unverzweigte Olefine für die Hydroformylierungsreaktion ein, läßt sich das erfindungsgemäße Aufarbeitungsverfahren mit besonderem Erfolg bei Produkten aus der Hydroformylierung von Propylen, n-Buten, n-Penten und n-Hexen anwenden, wobei in der Regel die absoluten Rhodiumkonzentrationen niedriger liegen.

Das erfindungsgemäße Verfahren kann mit großen Erfolg angewandt werden, wenn bisher unter Kobaltkatalyse durchgeführte Hydroformylierungsschritte auf die Rhodiumfahrweise umgestellt werden, ein aus EP-0 805 138 bekanntes Verfahren, das eine Weiterentwicklung des nach EP-0 111 257 bekannten Prozesses ist.

Durch das erfindungsgemäße Verfahren können mehr als 95% des ursprünglich vorhandenen Rhodiums zurückgewonnen werden. Dabei liegt der Kobaltgehalt in der erhaltenen aufkonzentrierten Rhodiumlösung bei weniger als 1 %, bezogen auf die Summe der Metalle Rhodium und Kobalt.

Selbstverständlich ist das erfindungsgemäße Verfahren nicht auf die Aufarbeitung von Lösungen beschränkt, die neben Rhodium auch noch Kobaltverbindungen als Verunreinigungen enthalten. Es läßt sich auch auf Katalysatorlösungen anwenden, die aus einem unter ausschließlicher Rhodiumkatalyse durchgeführten Prozeß stammen.

Die nachfolgenden Beispiele sollen die Erfindung näher erläutern, ohne sie zu beschränken.

### 1. Beispiel: Aufarbeitung einer verbrauchten Rhodium/Triphenylphosphin enthaltenden Lösung

1000 g einer verbrauchten Katalysatorlösung mit folgender Zusammensetzung:
55 Gew.-% n-Butyraldehyd, 2 Gew.-% Triphenylphosphinoxid, 6,3 Gew.-% Triphenylphosphin, 36,2 Gew.-% Höhersieder (im allgemeinen Aldolkondensationsprodukte aus Butyraldehyd) und 0,5 Gew.-% Leichtsieder (im allgemeinen Kohlenwasserstoffe mit 3 bis 7 Kohlenstoffatomen) und enthaltend 699 mg Rhodium (6,79 mmol) und 234 mg Kobalt (3,97 mmol) werden in einem 4 1 Dreihalskolben zur Verdünnung mit 1000g frischem n-Butyraldehyd gemischt und anschließend 2 mal mit jeweils 100 g 65%iger Phosphorsäure 30 Minuten bei 22°C extrahiert. Die Phasentrennung erfolgt unter leichtem Rühren innerhalb von ebenfalls 30 Minuten. Danach wird 2 mal mit jeweils 50g deionisiertem Wasser gewaschen, das jeweils mit 3 ml NaOH (10%ig) auf einen pH-Wert von 5,8 eingestellt wurde. Nach anschließender Phasentrennung wird die verbleibende organische Phase in einen 4 I Dreihaiskolben mit Frittenaufsatz und Frittenfilter überführt und unter Rühren bei 55°C mittels 150 l/h Luft über 12 Stunden bei 55°C begast. Nach Abschluß der Oxidation werden 1969 g an organische Phase erhalten. Die organische Phase wird zusammen mit 199,8 g einer wäßrigen Lösung von Trinatriumtri(m-sulfophenyl)phosphin (TPPTS) (entsprechend 101,9 mmol P III, Rh : P = 1:15) in einen 5 I Stahlautoklav überführt und 3 Stunden bei 5 MPa CO/H₂ Druck und 125°C intensiv gerührt. Das Reaktionsgemisch wird danach in einen 4 I Dreihalskolben mit unterem Auslaß überführt und die untere wäßrige Phase (144,2 g) von der oberen organischen Phase (1979 g) abgetrennt. Die wäßrige TPPTS-Lösung enthielt 687,7 mg Rhodium, entsprechend 98,4 % der in der Ausgangslösung ursprünglich enthaltenen Menge Rhodium. Der Kobaltgehalt in der wäßrigen TPPTS-Lösung lag unterhalb der analytischen Nachweisgrenze.

### 2. Beispiel: Hydroformylierung von Propylen mit der in Beispiel 1 erhaltenen Rh/TPPTS-Lösung

Bei der gemäß Beispiel 1 erhaltenen Rh/TPPTS-Lösung (P:Rh = 14:1) wird durch Frischzugabe von TPPTS ein Verhältnis P:Rh von 100 : 1 eingestellt. Der Rhodiumgehalt beträgt 260 ppm. Die Lösung wird in einen 0,21 Edelstahlautoklaven gegeben. In dem mit Rührer ausgerüsteten 0,21 Edelstahlautoklav werden Propylen und ein aus gleichen Volumenteilen bestehendes CO/H₂-Gemisch in einer solchen Menge zugeleitet, daß 10 Nl/h Abgas aus dem Reaktor entnommen werden können [Nl/h bedeuten dabei 1 Liter Abgas im Normzustand (20°C und 1 at) pro Stunde]. Gleichzeitig werden je Stunde 300 ml wäßrige Katalysatorlösung im Kreis durch den Reaktor geführt. Die Hydroformylierung wird halbkontinuierlich über 8 Stunden durchgeführt. Die übrigen Reaktionsparameter und die Ergebnisse der Hydroformylierung sind in der Tabelle 1 zu entnehmen.

**Tabelle 1:**

| Hydroformylierung von Propylen in Gegenwart einer aufgearbeiteten Katalysatorlösung | |
|---|---|
| Versuchsdauer [h] | 8 |
| Temperatur [°C] | 122 |
| Druck [bar] | 50 |
| Rh-Gehalt [mg/kg] | 260 |
| P(III) Gehalt [mmol/kg] | 263 |
| Ligand/Rh | 100 |
| C3-Einsatz [g/h] | 40 |
| Aktivität [mol Aldehyd/mol Rh.min] | 15,08 |
| Produktivität [kg Aldehyd/l Kat.Lsg.·h] | 0,213 |
| Umsatz [%] | 37 |
| N/i-Verhältnis | 93/7 |

### 3. Beispiel: Vergleichsbeispiel zur Hydroformylierung

Eine frisch hergestellte TPPTS-Lösung wird mit 260 ppm Rhodiumacetat in den 0,21 Edelstahlautoklav eingebaut. Das Verhältnis zwischen P : Rh beträgt dabei 100 : 1. Ansonsten wird die Hydroformylierungsreaktion wie unter Beispiel 2 beschrieben durchgeführt. Die übrigen Reaktionsparameter und die Ergebnisse der Hydroformylierung sind in der Tabelle 2 zu entnehmen.

**Tabelle 2:**

| Hydroformylierung von Propylen in Gegenwart einer frischen Katalysatorlösung | |
|---|---|
| Versuchsdauer [h] | 8 |
| Temperatur [°C] | 122 |
| Druck [bar] | 50 |
| Rh-Gehalt [mg/kg] | 260 |
| P(III) Gehalt [mmol/kg] | 265 |
| Ligand/Rh | 100 |
| C3-Einsatz [g/h] | 40 |
| Aktivität [mol Aldehyd/mol Rh.min] | 15,53 |
| Produktivität [kg Aldehyd/l Kat.Lsg.·h] | 0,216 |
| Umsatz [%] | 38 |
| N/i-Verhältnis | 93/7 |

Wie ein Vergleich der Tabellen 1 und 2 zeigt, liefert das erfindungsgemäße Aufarbeitungsverfahren eine Katalysatorlösung (Tabelle 1), die nahezu die gleichen Aktivitäts-, Produktivitäts- und Umsatzzahlen aufweist wie eine frisch hergestellte Katalysatoriösung unter Einsatz einer frischen Rhodiummenge (Tabelle 2).

## Patentansprüche

1. Verfahren zur Rückgewinnung von Rhodium aus organischen Lösungen, die Rhodiumkomplexverbindungen, Kobaltkomplexverbindungen und gegebenenfalls Komplexliganden enthalten, **dadurch gekennzeichnet, daß**
die organische Phase mit einer wäßrigen Lösung eines Phosphats der allgemeinen Formel (O)P(OR¹)(OR²)(OR³), wobei R¹, R² und R³ gleich oder verschieden sind und Wasserstoff, einen geradkettigen oder verzweigten Alkylrest mit 1-10 Kohlenstoffatomen oder einen substituierten oder unsubstituierten Arylrest mit 6-10 Kohlenstoffatomen, wobei der Arylrest mit geradkettigen oder verzweigten Alkylresten mit 1-4 Kohlenstoffatomen substituiert ist, bedeuten, oder eines Phosphonats der allgemeinen Formel R⁴P(O)(OR⁵)(OR⁶), wobei R⁴, R⁵ und R⁶ gleich oder verschieden sind und Wasserstoff, einen geradkettigen oder verzweigten Alkylrest mit 1-10 Kohlenstoffatomen oder einen substituierten oder unsubstituierten Arylrest mit 6-10 Kohlenstoffatomen, wobei der Arylrest mit geradkettigen oder verzweigten Alkylresten mit 1-4 Kohlenstoffatomen substituiert ist, bedeuten, extrahiert wird, wobei die Rhodiumkomplexverbindungen in der organischen Phase verbleiben;
die organische Phase mit Wasser bei einem pH-Wert von 0 bis 8 gewaschen wird;
nach der Phasentrennung die organische Phase bei einer Temperatur von 0 bis 100°C mit einem Oxidationsmittel behandelt wird;
die organische Phase mit einer wäßrigen Lösung eines wasserlöslichen Arylphosphins bei erhöhter Temperatur und erhöhtem Druck behandelt wird;
und die rhodiumhaltige wäßrige Lösung von der organischen Phase durch Phasentrennung abgetrennt wird.

2. Verfahren nach Anspruch 1, **dadurch gekennzeichnet, daß** die Extraktion der organischen Phase mit der wäßrigen Lösung des Phosphats oder Phosphonats, wie in Anspruch 1 definiert, bei Normaldruck bei einer Temperatur von 0 bis 100°, vorzugsweise von 20 bis 40°C erfolgt.

3. Verfahren nach Anspruch 1, **dadurch gekennzeichnet, daß** die Extraktion der organischen Phase mit der wäßrgen Lösung des Phosphats oder Phosphonats, wie in Anspruch 1 definiert, bei einem Druck von 0,5 bis 20 MPa und bei einer Temperatur von 100 bis 200°, vorzugsweise von 120 bis 140°C erfolgt.

4. Verfahren nach einem der Ansprüche 1-3, **dadurch gekennzeichnet, daß** R¹, R², R³ und R⁴, R⁵, R⁶ gleich oder verschieden sind und einen geradkettigen oder verzweigten Alkylrest mit 1 bis 5 Kohfenstoffatomen bedeuten.

5. Verfahren nach einem oder Ansprüche 1 bis 4, **dadurch gekennzeichnet, daß** als Extraktionsmittel Phosphorsäure, Trimethylphosphat oder Methyldimethylphosphonat verwendet wird.

6. Verfahren nach einem der Ansprüche 1 bis 5, **dadurch gekennzeichnet, daß** die Wasserwäsche bei einem pH-Wert von 4 bis 8 erfolgt.

7. Verfahren nach einem der Ansprüche 1 bis 6, **dadurch gekennzeichnet, daß** die Oxidation der organischen Phase mit Sauerstoff, Sauerstoff enthaltenden Gasgemischen, Wasserstoffperoxid, Wasserstoffperoxid bildende Verbindungen, Hypochlorit, Chromate oder Permanganate erfolgt.

8. Verfahren nach Anspruch 7, **dadurch gekennzeichnet, daß** als Oxidationsmittel Luft verwendet wird.

9. Verfahren nach einem der Ansprüche 1 bis 8, **dadurch gekennzeichnet, daß** die Oxidation bei einer Temperatur von 30 bis 60°, vorzugsweise von 50 bis 60°C durchgeführt wird.

10. Verfahren nach einem der Ansprüche 1 bis 9, **dadurch gekennzeichnet, daß** die Oxidation bei Drücken von 0,1 bis 2,0 MPa, vorzugsweise 0,2 bis 1 MPa und insbesondere von 0,3 bis 0,7 MPa durchgeführt wird.

11. Verfahren nach einem der Ansprüche 1 bis 10, **dadurch gekennzeichnet, daß** die nach der oxidativen Behandlung erhaltene organische Phase mit einer wäßrigen Lösung eines Phosphins der allgemeinen Formel 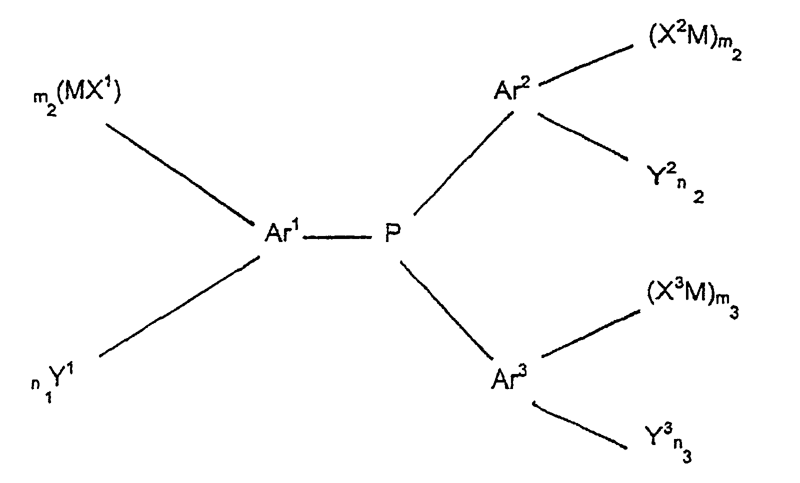 wobei Ar¹, Ar², Ar³ jeweils für eine Phenyl- oder Naphthylgruppe, Y¹, Y², Y³ jeweils für eine geradkettige oder verzweigte Alkylgruppe mit 1 bis 4 C-Atomen, eine Alkoxygruppe, ein Halogenatom, eine OH-, CN-, NO₂- oder R⁷R⁸N-Gruppe, in der R⁷ und R⁸ jeweils eine geradkettige oder verzweigte Alkylgruppe mit 1 bis 4 C-Atomen ist, steht, X¹, X², X³ jeweils einen Carboxylat-(COO⁻) und/oder Sulfonat-(SO₃⁻)-Rest bedeutet, n₁, n₂, n₃ gleiche oder verschiedene Zahlen von 0 bis 5 sind, M ein Alkalimetallion, das Äquivalent eines Erdalkalimetall- oder Zinkions oder ein Ammonium- oder quatäres Alkylammoniumion der allgemeinen Formel N(R⁹R¹⁰R¹¹R¹²)⁺ darstellt, in der R⁹, R¹⁰, R¹¹, R¹² jeweils eine geradkettige oder verzweigte Alkylgruppe mit 1 bis 4 C-Atomen ist, und m₁, m₂, m₃ gleiche oder verschiedene ganze Zahlen von 0 bis 3 sind, wobei mindestens eine Zahl m₁, m₂, m₃ gleich oder größer als 1 ist, extrahiert wird.

12. Verfahren nach Anspruch 11, **dadurch gekennzeichnet, daß** die Extraktion bei Drücken von 1 bis 20 MPa, vorzugsweise von 1 bis 10 MPa, insbesondere von 2,5 bis 5 MPa und bei Temperaturen von 20 bis 200°C, vorzugsweise 50 bis 150°C und insbesondere von 120 bis 140°C durchgeführt wird.

13. Verfahren nach einem der Ansprüche 10 bis 12, **dadurch gekennzeichnet, daß** die Extraktion in Gegenwart von Synthesegas durchgeführt wird.

## Claims

1. A process for recovering rhodium from organic solutions which comprise rhodium complexes and cobait complexes with or without complexing ligands, which comprises
extracting the organic phase with an aqueous solution of a phosphate of the formula (O)P(OR¹)(OR²)(OR³), where R¹, R² and R³ are identical or different and are hydrogen, a straight-chain or branched alkyl radical having 1-10 carbon atoms or a substituted or unsubstituted aryl radical having 6-10 carbon atoms, and the aryl radical is substituted by straight-chain or branched alkyl radicals having 1-4 carbon atoms, or with a phosphonate of the formula R⁴P(O)(OR⁵)(OR⁶), where R⁴, R⁵ and R⁶ are identical or different and are hydrogen, a straight-chain or branched alkyl radical having 1-10 carbon atoms or a substituted or unsubstituted aryl radical having 6-10 carbon atoms, and the aryl radical is substituted by straight-chain or branched alkyl radicals having 1-4 carbon atoms, and the rhodium complexes remain in the organic phase;
washing the organic phase with water at a pH of from 0 to 8;
treating the organic phase after phase separation with an oxidizing agent at a temperature of from 0 to 100°C;
treating the organic phase with an aqueous solution of a watersoluble arylphosphine at elevated temperature and elevated pressure;
and removing the rhodium-containing aqueous solution from the organic phase by phase separation.

2. The process as claimed in claim 1, wherein the organic phase is extracted with the aqueous solution of the phospate or phosphonate as defined in claim 1 at atmospheric pressure and at a temperature of from 0 to 100°C, preferably from 20 to 40°C.

3. The process as claimed in claim 1, wherein the organic phase is extracted with the aqueous solution of the phosphate or phosphonate as defined in claim 1 at a pressure of from 0.5 to 20 MPa and at a temperature of from 100 to 200°C, preferabty from 120 to 140°C.

4. The process as claimed in one of claims 1-3, wherein R¹, R², R³, R⁴, R⁵ and R⁶ are identical or different and are a straight-chain or branched alkyl radical having from 1 to 5 carbon atoms.

5. The process as claimed in one of claims 1 to 4, wherein a phosphoric acid, trimethyl phosphate or methyl dimethylphosphonate extractant is used.

6. The process as claimed in one of claims 1 to 5, wherein the water wash is effected at a pH of from 4 to 8.

7. The process as claimed in one of claims 1 to 6, wherein the organic phase is oxidized using oxygen, oxygen-containing gas mixtures, hydrogen peroxide, hydrogen peroxide-forming compounds, hypochlorite, chromates or permanganates.

8. The process as claimed in claim 7, wherein the oxidizing agent used is air.

9. The process as claimed in one of claims 1 to 8, wherein the oxidation is carried out at a temperature of from 30 to 60°C, preferably from 50 to 60°C.

10. The process as claimed in one of claims 1 to 9, wherein the oxidation is carried out at a pressure of from 0,1 to 2.0 MPa, preferably from 0.2 to 1 MPa and in particular from 0.3 to 0.7 MPa.

11. The process as claimed in one of claims 1 to 10, wherein the organic phase obtained after oxidative treatment is extracted with an aqueous solution of a phospine of the formula 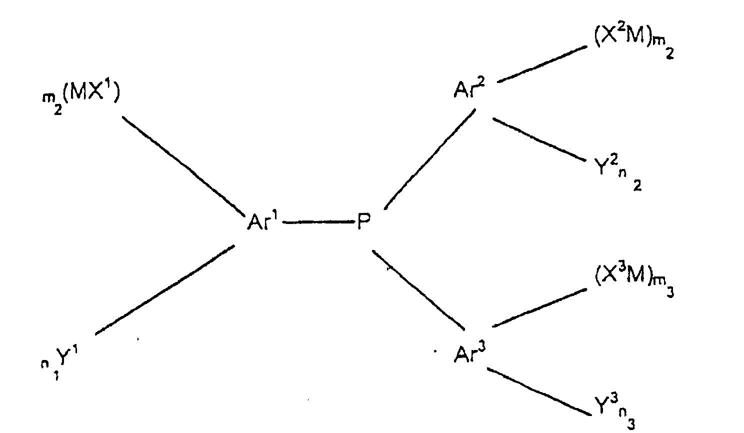 where Ar¹, Ar² and Ar³ are each a phenyl or naphthyl group, Y¹, Y² and Y³ are each a straight-chain or branched alkyl group having from 1 to 4 carbon atoms, an alkoxy group, a halogen atom, an OH, CN, NO₂ or R⁷R⁸N group, where R⁷ and R⁸ are each a straight-chain or branched alkyl group having from 1 to 4 carbon atoms, X¹, X² and X³ are each a carboxylate (COO⁻) and/or sulfonate (SO₃⁻) radical, n₁, n₂ and n₃ are identical or different numbers from 0 to 5, M is an alkali metal ion, the equivalent quantity of an alkaline earth metal or zinc ion or an ammonium or quaternary alkylammonium ion of the formula N(R⁹R¹⁰R¹¹R¹²)⁺, where R⁹, R¹⁰, R¹¹ and R¹² are each a straight-chain or branched alkyl group having from 1 to 4 carbon atoms, and m₁, m₂ and m₃ are identical or different integers from 0 to 3, and at least one number m₁, m₂ or m₃ is equal to or greater than 1.

12. The process as claimed in claim 11, wherein the extraction is carried out at pressures of from 1 to 20 MPa, preferably from 1 to 10 MPa, in particular from 2.5 to 5 MPa and at temperatures of from 20 to 200°C, preferably from 50 to 150°C and in particular from 120 to 140°C.

13. The process as claimed in one of claims 10 to 12, wherein the extraction is carried out in the presence of synthesis gas.

## Revendications

1. Procédé de récupération du rhodium en provenance de solutions organiques, qui contiennent des composés complexes du rhodium, des composés complexes du cobalt et, le cas échéant, des ligands complexes, **caractérisé en ce que** l'on procède
à l'extraction de la phase organique à l'aide d'une solution aqueuse d'un phosphate de formule générale (O)P(OR¹)OR²)(OR¹), R¹, R² et R¹ étant identiques ou différents et signifiant l'hydrogène, un résidu alkyle, linéaire ou ramifié, ayant 1-10 atomes de carbone ou un résidu aryle substitué ou non substitué, ayant 6-10 atomes de carbone, le résidu aryle étant substitué par des résidus alkyles linéaires ou ramifiés ayant 1-4 atomes de carbone, ou d'un phosphonate de formule générale R⁴P(O)(OR⁵)(OR⁶), R⁴, R⁵ et R⁶ étant identiques ou différents et signifiant l'hydrogène, un résidu alkyle linéaire ou ramifié, ayant 1-10 atomes de carbone ou un résidu aryle substitué ou non substitué, ayant 6-10 atomes de carbone, le résidu aryle étant substitué par des résidus alkyles linéaires ou ramifiés, ayant 1-4 atomes de carbone, les composés complexes du rhodium restant dans la phase organique ;
au lavage de la phase organique à l'aide d'eau à une valeur de pH de 0 à 8 ;
au traitement de la phase organique, après la séparation des phases, à l'aide d'un agent d'oxydation à une température de 0 à 100°C ;
au traitement de la phase organique à l'aide d'une solution aqueuse d'une arylphosphine hydrosoluble à température et à pression élevées ;
et à la séparation de la solution aqueuse contenant du rhodium de la phase organique par une opération de séparation des phases.

2. Procédé selon la revendication 1, **caractérisé en ce que** l'extraction de la phase organique à l'aide de la solution aqueuse du phosphate ou du phosphonate, telle qu'elle est définie dans la revendication 1, se fait à pression normale à une température de 0 à 100°C, de préférence, de 20 à 40°C.

3. Procédé selon la revendication 1, **caractérisé en ce que** l'extraction de la phase organique à l'aide de la solution aqueuse du phosphate ou du phosphonate, telle qu'elle est définie dans la revendication 1, se fait à une pression de 0,5 à 20 MPa et à une température de 100 à 200°C, de préférence, de 120 à 140°C.

4. Procédé selon l'une quelconque des revendications 1-3, **caractérisé en ce que** R¹, R², R³ et R⁴, R⁵, R⁶ sont identiques ou différents et désignent un résidu alkyle linéaire ou ramifié ayant de 1 à 5 atomes de carbone.

5. Procédé selon l'une quelconque des revendications 1 à 4, **caractérisé en ce que** l'on utilise, en tant qu'agent d'extraction, l'acide phosphorique, le phosphate de triméthyle ou le phosphonate de méthyldiméthyle.

6. Procédé selon l'une quelconque des revendications 1 à 5, **caractérisé en ce que** le lavage à l'eau se fait à une valeur de pH de 4 à 8.

7. Procédé selon l'une quelconque des revendications 1 à 6, **caractérisé en ce que** l'oxydation de la phase organique se fait à l'aide d'oxygène, de mélanges gazeux contenant de l'oxygène, de peroxyde d'hydrogène, de composés formant du peroxyde d'hydrogène, d'hypochlorite, de chromates ou de permanganates.

8. Procédé selon la revendication 7, **caractérisé en ce que** l'on utilise de l'air en tant qu'agent d'oxydation.

9. Procédé selon l'une quelconque des revendications 1 à B, **caractérisé en ce que** l'oxydation est effectuée à une température de 30 à 60°C, de préférence, de 50 à 60°C.

10. Procédé selon l'une quelconque des revendications 1 à 9, **caractérisé en ce que** l'oxydation est effectuée à des pressions de 0,1 à 2,0 MPa, de préférence, de 0,2 à 1 MPa et en particulier de 0,3 à 0,7 MPa.

11. Procédé selon l'une quelconque des revendications 1 à 10, **caractérisé en ce que** l'on procède à l'extraction de la phase organique obtenue après le traitement d'oxydation à l'aide d'une solution aqueuse d'une phosphine de formule générale 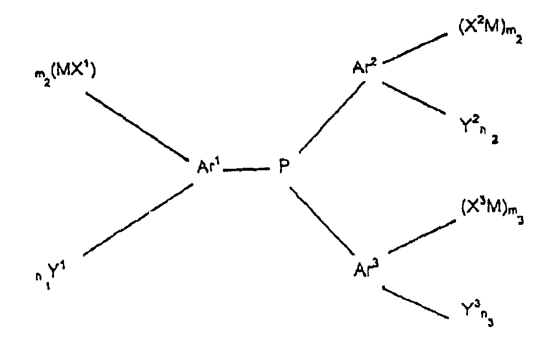 Ar¹, Ar², Ar³ représentant ici à chaque fois un groupement phényle ou naphtyle, Y¹, Y², y³ représentant à chaque fois un groupement alkyle linéaire ou ramifié ayant de 1 à 4 atomes de carbone, un groupement alcoxy, un atome d'halogène, un groupement OH-, CN-, NO₂- ou un groupement R⁷R⁸N-, dans lequel R⁷ et R⁸ sont à chaque fois un groupement alkyle linéaire ou ramifié ayant de 1 à 4 atomes de carbone, X¹, X², X³ signifiant à chaque fois un résidu carboxylate (COO-) et/ou sulfonate (SO₃⁻)-, n₁, n₂, n₃ étant des nombres identiques ou différents allant de 0 à 5, M étant un ion de métal alcalin, l'équivalent d'un ion de métal alcalino-terreux ou de zinc ou un ion ammonium ou alkylammonium quaternaire de formule générale N(R⁹R¹⁰R¹¹R¹²)⁺, dans laquelle R⁹, R¹⁰, R¹¹, R¹² sont à chaque fois un groupement alkyle linéaire ou ramifié ayant de 1 à 4 atomes de carbone et m₁, m₂, m₃ étant des nombres entiers identiques ou différents allant de 0 à 3, au moins un nombre m₁, m₂, m₃ étant supérieur à 1.

12. Procédé selon la revendication 11, **caractérisé en ce que** l'extraction est effectuée à des pressions de 1 à 20 MPa, de préférence, de 1 à 10 MPa, en particulier de 2,5 à 5 MPa et à des températures de 20 à 200°C, de préférence, de 50 à 150°C et en particulier de 120 à 140°C.

13. Procédé selon l'une quelconque des revendications 10 à 12, **caractérisé en ce que** l'extraction est effectuée en présence de gaz de synthèse.
